# EUROPEAN PATENT APPLICATION

(11) **EP 2 479 927 A1**
(43) Date of publication of application: **25.07.2012**
(21) Application number: 10788956.0
(22) Date of filing: 18.06.2010
(51) Int. Cl.: H04L 12/24

(54) **SERVICE PROVIDER ACCESS CODE DETECTION METHOD AND ACCESS CODE MANAGEMENT SYSTEM**

(30) Priority: 16.09.2009 CN 200910092722
(71) Applicant: ZTE Corporation, Shenzhen, Guangdong 518057 (CN)
(72) Inventor: ZHANG, Haibo, Guangdong 518057 (CN); HUA, Guodong, Guangdong 518057 (CN); NIU, Guoyang, Guangdong 518057 (CN)
(74) Representative: Johnson, Richard Alan
(86) International application number: PCT/CN2010/074049
(87) International publication number: WO 2010/145560

(57) **Abstract**

The present invention provides a method for detecting an access code of a service provider and a system for managing an access code of a service provider, belonging to the technical field of communications. In the method, an access code managing system firstly parses an input access code to acquire a first area identifier code in the inputted access code; then, finds out a first access code range corresponding to the acquired first area identifier code according to the first area identifier code and the preset corresponding relationship between the area identifier code and the access code range; and finally, determines whether the input access code is in the first access code range, and if yes, storing the input access code in the first access code range. Therefore, the method can effectively help an operator to improve the working efficiency of determining whether the input access code is correct and can improve the inputting precision of the access code.

## Description

### Technical field of the invention

This invention belongs to the technical field of communication, in particular to a method for detecting an access code of a service provider and a system for managing an access code of a service provider.

### Background of the invention

A message service provider (SP) needs to provide access resources, i.e., an SP access code when providing services to a user by individual telecommunication service operating networks. The access code is an identity of the SP, and plays an important role in the use of the user, the service provision of the SP and a gateway router.

With the continuous development of domestic telecommunication technology and the booming domestic telecommunication market, the SP provides all kinds of service products to meet the requirements of various groups of consumers; and the diverse products corresponding to these services. The ordering of the service products is completed by an instruction parsing system in which the access code is used for identifying the SP and composes the ordering code of a product together with other access codes (such as service access code), so that the instruction parsing system has a special requirement on the encoding rule of the access code.

In the existing method, generally the operator manually determines whether an input access code is correct. Even if a management interface provides an assistant means, as the detection logic is written very rigidly, if the policies and regulations or service development requirements are changed and a conflict detection rule needs to be modified, the old version must be updated with a new version.

### Summary of the invention

In order to solve the above problem, the objective of the present invention is to provide a method for detecting an access code of an SP and a system for managing an access code of an SP, so as to effectively help an operator to improve the working efficiency of determining whether the inputted access code is correct and improve the accuracy of inputting the access code.

In order to achieve the objective, the present invention provides the method for detecting access code of SP, comprising:
an access code managing system parsing an inputted access code to acquire a first area identifier code in the inputted access code;
the access code managing system finding out a first access code range corresponding to the acquired first area identifier code according to the first area identifier code and the preset corresponding relationship between the area identifier code and the access code range; and
determining whether the inputted access code meets the first access code range, and if yes, the access code managing system storing the inputted access code in the first access code range.

Preferably, before the access code managing system parses the inputted access code, the method further comprises:
the access code managing system determining whether the inputted access code meets a preset access code length, and if yes, executing the step of the access code managing system parsing the inputted access code; otherwise, prompting that the length of the inputted access code is not correct.

Preferably, multiple access codes are inputted; and before the access code managing system stores the access code, the method further comprises:
the access code managing system determining whether the inputted access code in the first access code range and other access codes in the multiple access codes include one another, and if yes, storing the inclusion involved access codes in a conflict information array and prompting that there are conflict access codes; otherwise, executing the step of the access code managing system storing the inputted access code in the first access code range.

Preferably, before the access code managing system stores the inputted access code in the first access code range, the method further comprises:
the access code managing system determining whether the inputted access code in the first access code range and the access codes in the access code managing system include one another, and if yes, storing the inclusion involved access codes in a conflict information array and prompting that there are conflict access codes; otherwise, executing the step of the access code managing system storing the inputted access code in the first access code range.

Preferably, the access codes in the access code managing system are of one or more kinds of a stored access code, a reserved access code, a blacklist access code and a shared access code.

Preferably, after the preset corresponding relationship between the area identifier code and the access code range is changed, the method further comprises:
the access code managing system traversing the access codes therein, then the access code managing system finding out a second access code range corresponding to the acquired first area identifier code according to the first area identifier code and the changed corresponding relationship between the area identifier code and access code range, determining whether the access codes therein are in the second access code range, and if not, storing the access codes not in the second access code range to the conflict information array.

Preferably, after the preset access code length is changed, the method further comprises:
the access code managing system traversing the stored access codes, and determining whether the lengths of the access codes therein meet the requirement according to the changed access code length, and if not, stores the access codes whose lengths do not meet the requirement to the conflict information array.

The present invention further provides a system for managing access code, comprising:
a parsing module, adapted for parsing an inputted access code to acquire a first area identifier code in the inputted access code;
a finding module, adapted for finding out a first access code range corresponding to the acquired first area identifier code according to the first area identifier code and the preset corresponding relationship between the area identifier code and the access code range; and
a first determination module, adapted for determining whether the inputted access code in the first access code range meets the first access code range, and if yes, storing the inputted access code, otherwise, storing the inputted access code in the first access code range to a conflict information array and prompting that there is a conflict access code.

Preferably, the system further comprises, a second determination module adapted for determining whether the inputted access code in the first access code range and other access codes in the access codes include one another, and if yes, storing the inclusion involved access codes in the conflict information array and prompting that there are conflict access codes; otherwise, storing the inputted access code in the first access code range.

Preferably, the system further comprises, a third determination module adapted for determining whether the inputted access code in the first access code range and the access codes stored in the access code managing system include one another, and if yes, storing the inclusion involved access codes in the conflict information array and prompting that there are conflict access codes, otherwise, storing the inputted access code in the first access code range.

At least one of the above technical solutions has the following advantages: first, the area identifier code in the access code is acquired; then, the access code range corresponding to the acquired area identifier code is found out according to the preset corresponding relationship between the area identifier code and the access code range; and it is determined whether the input access code is in the access code range; and if yes, the access code managing system can store the input access code. In the detection process of the access code, the operator can further add other detection rules to ensure the correctness of the input access code. Therefore, when the policies and regulations or service development requirements are changed and conflict detection rules need to be modified, the operator only needs to correspondingly modify the detection rule, rather than updating with the access code managing system of a new version. So that, it can effectively help the operator to improve the working efficiency of determining whether the input access code is correct and improve the input precision of the access code.

### Brief description of the drawings

Fig. 1 is a flowchart of a method for detecting access code of SP in one embodiment of the present invention;
Fig. 2 is a flowchart showing the conflict detection determination of access code in one embodiment of the present invention; and
Fig. 3 is a diagram showing the structure of a system for managing access code in one embodiment of the present invention.

### Detailed description of the embodiments

To make the objectives, technical solutions and advantages of the embodiments of the present invention clearer and easier to understand, the embodiments of the present invention are described below with reference to the embodiments and drawings in detail. Here, the schematic embodiments and explanation of the present invention are used for explaining the present invention rather than limiting the present invention.

According to one embodiment of the present invention, a method for detecting access code of SP is provided, wherein an access code managing system parses an input access code to acquire a first area identifier code in the input access code; the access code managing system finds out a first access code range corresponding to the acquired first area identifier code according to the first area identifier code and the preset corresponding relationship between the area identifier code and the access code range; and it is determined whether the input access code is in the first access code range, and if yes, the access code managing system stores the input access code within the first access code range.

In related technologies, the detection logic of the access code of the SP is rigidified and not easy to upgrade and update. In one embodiment of the present invention, the corresponding relationship between the area identifier code and the access code range can be used for detecting the access code of the SP. Therefore, when the policies and regulations or service development requirements are changed and the conflict detection rules need to be modified, the operator only need to correspondingly modify the detection rule (usually it is the corresponding relationship between the above area identifier code and access code range) without updating with a new version of the access code managing system, so as to effectively help the operator to improve the working efficiency of determining whether the inputted access code is correct and improve the inputting precision of the access code. In addition, the operator can further add other detection rules in the detection process of the access code in order to ensure the correctness of the input access code.

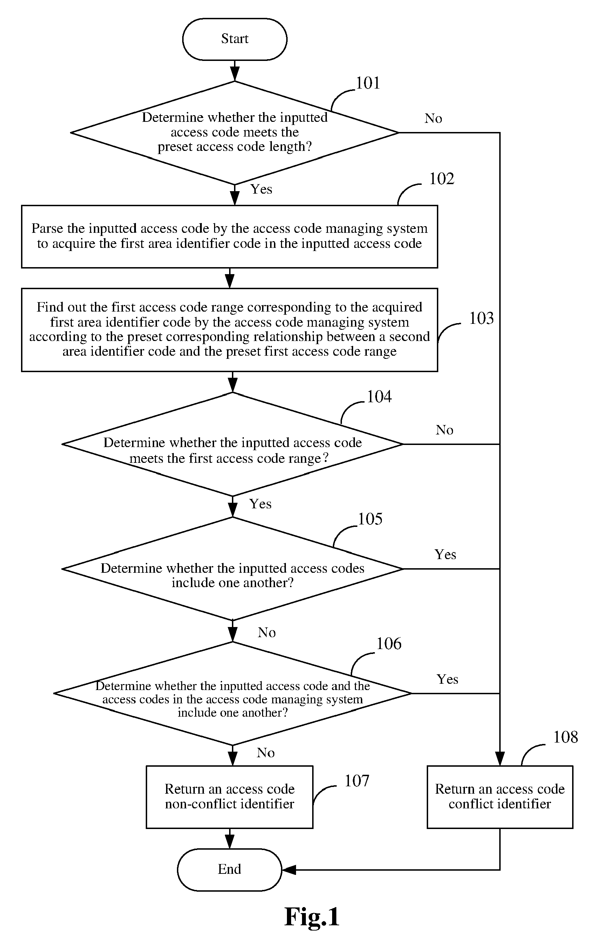

As shown in Fig. 1, which is a flowchart of a method for detecting access code of SP in one embodiment of the present invention, the method comprises the following steps.

S101: the access code managing system determines whether the inputted access code meets the preset access code length, and if yes, S102 is executed; otherwise, S108 is executed.

In the embodiment, the detection rule for the access code length can be preset in the access code managing system; the detection rule can be used for detecting whether the inputted access code meets the preset access code length; and the preset access code length can be the minimum length, the maximum length or the value between the minimum and the maximum lengths of the access code. For example, when the preset access code length is between 4 to 20, wherein 4 is the minimum length of the access code and 20 is the maximum length of the access code, then in the step, it is determined whether the length of the inputted access code is between 4 to 20, and if yes, S102 is executed; otherwise, an access code conflict identifier is returned and the operator is prompted that the length of the inputted access code does not meet the requirement.

Of course, when it is determined whether the access code length meets the requirements, it can be further determined whether characters in the access code are all figures, i.e., it is determined whether the type of the access code meets the requirement, and if not, the operator can also be prompted that the type of the inputted access code does not meet the requirement.

The determination in the step can be repeated. That is to say, when there is an access code input, S101 can be executed.

S102: the access code managing system parses the inputted access code to acquire the first area identifier code in the inputted access code.

When the access code is divided according to the area (such as an administrative area), the first area identifier code is generally set in the access code. Therefore, the access code managing system can acquire the first area identifier code in the access code by the existing parsing method.

S103: the access code managing system finds out the first access code range corresponding to the acquired first area identifier code according to the preset corresponding relationship between a second area identifier code and the preset first access code range.

In the embodiment, the corresponding relationship between the second area identifier code and the first access code range can be preset in the access code managing system. For example, the data structure of the preset mapping relationship between the second area identifier code and the preset first access code range can be set up in the database of the access code managing system and can be called during the inputting or conflict detection of the access code. For example, the access code range of the area identifier code 051 (the area identifier code of Guangdong Province) can be preset as 1350 to 1353 in the database.

S104: determining whether the input access code is in the first access code range, and if yes, S105 is executed, otherwise, S108 is executed.

The access code managing system determines whether the input access code is in the first access code range acquired according to S103, and if yes, the next step is executed, otherwise, the access code not in the first access code range is stored to the conflict information array, and after being completely traversed, the access code in the conflict information array can be output.

For example, the access code range of the area identifier code 051 can be preset as 1350 to 1353 in the database. When the input access code is 13541, the access code managing system will prompt that the input access code is not in the correct range and store the access code 13541 into the conflict information array.

In the embodiment, if the preset access code range is adjusted, the access code stored in the access code managing system can be detected according to the adjusted access code range. The conflict access code not in the adjusted access code range is stored into the conflict information array; and then the conflict access code in the conflict information array is present to the operator.

S105: determining whether the input access codes include one another, and if not, S106 is executed, otherwise, S108 is executed.

The present step only needs to be executed when multiple access codes are synchronously input. Therefore, this step can be omitted and S106 is executed when there is only one access code input.

In the embodiment, the access code inclusion rule can be preset in the access code managing system. For example, the existing access code inclusion rule can be used, in which the access codes cannot include or be included by other access codes from the first digit. For instance, when multiple access codes 1350107, 13501071 and 1350105 are input, the access code managing system can determine that the access code 1350107 is included by 13501071 according to the access code inclusion rule. Thus, the operator can be prompted that the access codes have conflict, and the access codes 1350107 and 1301071 are stored to the conflict information array, and conflicts of multiple input access codes or access codes in the file can be prompted to the operator, and the specific conflict access codes are pointed out.

If multiple access codes 1350107, 1350108, 1350109 are input, the access code managing system can determine that the access codes do not include one another. Thus, the access codes are successfully input and the next step can be executed.

S106: determining whether the input access code and the access codes in the access code managing system include one another, and if not, S107 is executed, otherwise, S108 is executed.

In the embodiment, the access codes in the access code managing system can be of one or more kinds of: a stored access code, a reserved access code, a blacklist access code and a shared access code, wherein

The stored access code is the one stored in the access code managing system by the flow of the method;
the reserved access code is the one reserved by the access code managing system for other services;
the blacklist access code is the one shielded by the access code managing system and forbidden to be used; and
the shared access code is the one which is applied when a subsidiary company and a parent company shares an access code; a special shared access code data structure can be provided in the database of the access code managing system in order to be distinguished from the ordinary access code; in the inclusion rule conflict detection of the ordinary access code, it is needed to detect the data structure of the ordinary access code and that of the shared access code; and for the shared access code, it is needed to detect the correctness of a password in the data structure of the ordinary access code and that of the shared access code.

In this step, the input access codes are traversed; then it is determined whether the stored access code, reserved access code, blacklist access code and shared access code in the access code managing system include and are included by one another; and if yes, the conflict access codes can be stored to the conflict information array; otherwise, the access codes are input successfully.

Of course, in the embodiment, the reserved access code, blacklist access code and shared access code can be also maintained. For example, the blacklist access code can be added or deleted; and the shared access code can be added, deleted or subjected to password protection.

S107: An access code non-conflict identifier is returned and then the flow of the method can be ended.

S108: An access code conflict identifier is returned and then the flow of the method can be ended.

When the step is executed and the access code conflict identifier is returned, the conflict access code in the conflict information array can be output to prompt the operator.

Of course, in the embodiment of the present invention, the detection rule of the access code is not limited to what mentioned above. The operator can preset various detection rules in the access code managing system. Furthermore, after one of the detection rules is changed, the access code managing system can detect the stored access code by the changed detection rule. To better understand the technical solution of the present invention, the flow of the method is introduced below by an embodiment.

First, the access code detection rule is preset in the access code managing system, which comprises the following rules.
(1) An access code length rule, in which the length range of the access code is 4 to 20.
(2) An access code range area dividing rule wherein it can be configured whether to use the rule. If the rule is enabled, it is necessary to set up the data structure of the mapping relationship between the access code range and the area identifier code in the database in the access code managing system; and the data structure is called during the inputting or conflict detection of the access code. For example, the access code range of the area identifier code 051 is 1350 to 1353.
(3) An access code reserving rule wherein it can be configured whether to use the rule. A field with a reserved field identifier can be provided in the database in the access code managing system. For example, the reserved access codes comprise: 1350100, 1350101, and 1350102.
(4) An access code blacklist rule wherein it can be configured whether to use the rule. The rule is used for shielding some access codes forbidden to be used.
(5) An access code inclusion rule, which has been used by the access codes of the Telecommunication and Unicom SPs at present, i.e., the access codes cannot include or be included by other access codes from the first digit. Here, it can be configured whether to use the rule. It is assumed that the access codes, 1350103, 1350104, 1350105 and 1350106 have been stored in the access code managing system.
(6) An access code sharing rule wherein it can be configured whether to enable the shared rule. The default is not-being enabled. The rule is applied when a subsidiary company and a parent company share an access code. A special shared access code data structure is provided in the database to be distinguished from the ordinary access code. The inclusion rule conflict detection of the ordinary access code needs the detection of the data structure of the ordinary access code and that of the shared access code. For the shared access code, it is needed to detect the correctness of a password in the data structure of the ordinary access code and that of the shared access code.

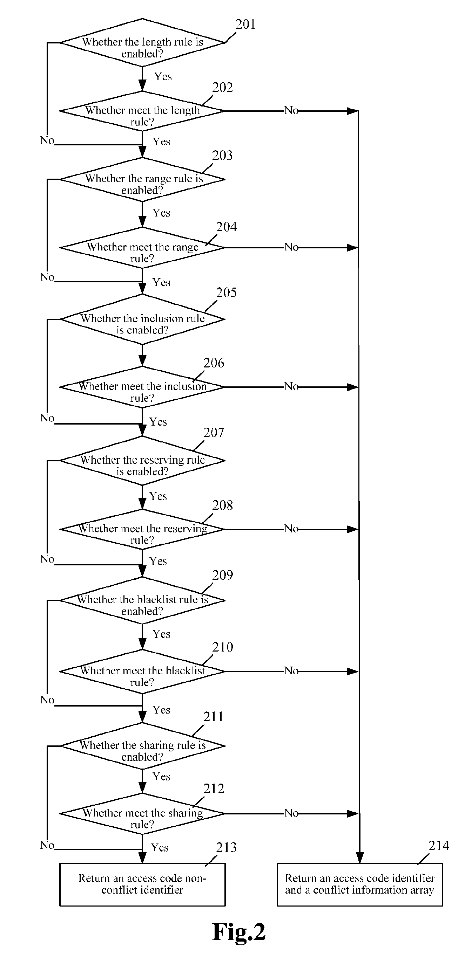

With reference to Fig. 2, which is a flowchart showing the conflict detection determination of access code in one embodiment of the present invention. The flow comprises the following steps.

S201: determining whether the access code length rule is enabled or not, and if enabled, S202 is executed, otherwise, S203 is executed.

S202: determining whether the input access code meets the access code length rule, and if yes, S203 is executed, otherwise, S214 is executed.

If the operator inputs the ID of the SP and the access code 135, then because the length of the access code does not meet the access code length rule, it is prompted that the length of the access code is not correct and this access code inputting fails.

S203: determining whether the access code range area dividing rule is enabled, and if yes, S204 is executed; otherwise, S205 is executed.

S204: determining whether the input access code meets the access code range area dividing rule, and if yes, S205 is executed, otherwise, S214 is executed.

If the operator inputs the ID of the SP and the access code 13541, it is prompted that the inputting is failed and the access code range is not correct.

S205: determining whether the access code inclusion rule is enabled or not, and if yes, S206 is executed, otherwise, S207 is executed.

S206: determining whether the input access code meets the access code inclusion rule, and if yes, S207 is executed, otherwise, S214 is executed.

If the operator inputs the ID of the SP and the access code 13501011, it is prompted that the inputting is failed and the access code includes the reserved access code 1350101.

If the operator inputs the ID of the SP and the access codes 1350107, 13501071, and 1350105, it is prompted that the inputting is failed wherein 1350107 is included in 13501071; 13501071 includes 1350107, and 1350105 includes the access code stored in the database.

If the operator inputs the ID of the SP and the access codes 1350107, 1350108 and 1350109, the inputting is successful.

S207: determining whether the access code reserving rule is enabled or not, and if yes, S208 is executed, otherwise, S209 is executed.

S208: determining whether the input access code meets the access code reserving rule, and if yes, S209 is executed, otherwise, S214 is executed.

In the embodiment, it is determined whether the input access code is included in the reserved access code, and if yes, the input access code does not meet the access code reserving rule, otherwise, it meets the rule.

S209: determining whether the access code blacklist rule is enabled or not, and if yes, S210 is executed, otherwise, S211 is executed.

S210: determining whether the input access code meets the access code blacklist rule, and if yes, S211 is executed, otherwise, S214 is executed.

In the embodiment, it is determined whether the input access code is included in the blacklist access code, and if yes, the input access code does not meet the access code blacklist rule, otherwise, it meets the rule.

S211: determining whether the access code sharing rule is enabled or not, and if yes, S212 is executed, otherwise, S213 is executed.

S212: determining whether the input access code meets the access code sharing rule, and if yes, S213 is executed, otherwise, S214 is executed.

In the embodiment, it is determined whether the input access code is included in the shared access code, and if yes, the inputted access code does not meet the access code sharing rule, otherwise, it meets the rule.

S213: an access code non-conflict identifier is returned.

S214: an access code conflict identifier and a conflict information array are returned.

It can be known from the technical solutions that first the area identifier code in the access code is acquired, and then the access code range corresponding to the acquired area identifier code is found out according to the preset corresponding relationship between the area identifier code and the preset access code range, and the access code managing system can store the input access code when the input access code meets the preset access code range. In the detection process of the access code, the operator can also add other detection rules to ensure the correctness of the input access code. Therefore, when the policies and regulations or service development requirements are changed and the conflict detection rules need to be modified, the operator only needs to correspondingly modify the detection rule without updating with a new version of the access code managing system, so as to effectively help the operator to improve the working efficiency and improve the inputting precision of the access code.

In order to implement the method embodiment, other embodiments of the present invention also provide a system for managing access code. It should be further explained that the following embodiment is for implementing the above method embodiment, so the modules in the system are arranged for implementing individual steps of the above method. But the present invention is not limited to the embodiments herein, and any systems and modules which can implement the method should be included in the protection scope of the present invention. Besides, in the following description, the contents same as the above method are omitted here in order to save the length of the document.

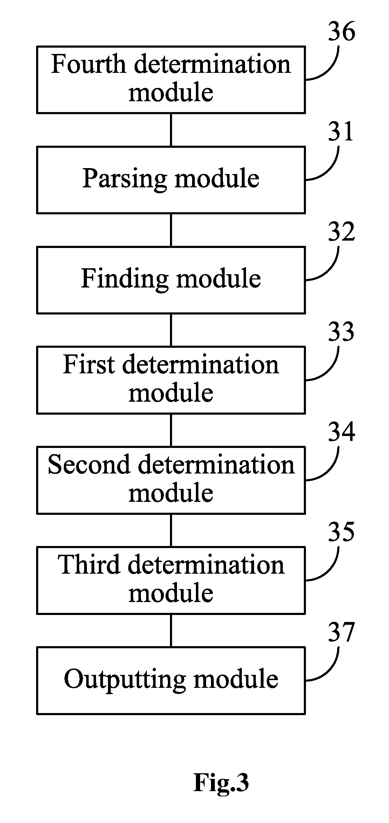

With reference to Fig. 3, which is a block diagram showing the structure of a system for managing access code in one embodiment of the present invention, the system comprises the follow modules.

A parsing module 31, adapted for parsing the input access code to acquire the first area identifier code in the input access code.

In the embodiment, the system for managing access code can be provided with a database adapted for setting up a corresponding table structure to store the corresponding relationship between the SP and the access code.

A finding module 32, adapted for finding out a first access code range corresponding to the acquired first area identifier code according to the first area identifier code and the preset corresponding relationship between the area identifier code and the access code range.

In the embodiment, the system for managing access code can be provided with a regulatory configuration file in the format of an Extensible Markup Language (XML) adapted for storing a default or custom access code detection rule.

A first determination module 33, adapted for determining whether the input access code of the first access code range is in the first access code range, and if yes, storing the input access code, otherwise, storing the input access code of the first access code range into the conflict information array and prompting that there is a conflict access code.

In another embodiment of the present invention, the system for managing the access code also comprises:
a second determination module 34, adapted for determining whether the input access code in the first access code range and the access codes other than the input access code in the multiple access codes include one another, and if yes, storing the access codes with mutual inclusion into the conflict information array and prompting that there are conflict access codes, otherwise, storing the input access code in the first access code range.

In another embodiment of the present invention, the system for managing the access code also comprises:
a third determination module 35, adapted for determining whether the input access code in the first access code range and the access codes stored in the access code managing system include one another, and if yes, storing the access codes with mutual inclusion into the conflict information array and prompting that there are conflict access codes, otherwise, storing the input access code in the first access code range.

In another embodiment of the present invention, the system for managing the access code also comprises:
a fourth determination module 36, adapted for determining whether the input access code meets the preset access code length, and if yes, triggering the parsing module 31, otherwise, prompting that the length of the input access code is not correct.

In another embodiment of the present invention, the system for managing the access code also comprises: an outputting module 37 adapted for outputting the access code in the conflict information array.

What mentioned above are only the preferential embodiments of the present invention. It should be indicated that for those skilled in the art, various improvements or modifications can be made within the concept of the present invention. These various improvements or modifications shall fall within the protection scope of the present invention.

## Claims

1. A method for detecting access code of service provider (SP), **characterized by** comprising:
parsing, by an access code managing system, an input access code to acquire a first area identifier code in the input access code;
finding out, by the access code managing system, a first access code range corresponding to the acquired first area identifier code according to the first area identifier code and a preset corresponding relationship between an area identifier code and an access code range; and
determining whether the input access code is in the first access code range, and if yes, the access code managing system storing the input access code in the first access code range.

2. The method according to claim 1, **characterized in that** before the access code managing system parses the input access code, the method further comprises:
determining, by the access code managing system, whether the input access code meets a preset access code length, and if yes, executing the step of the access code managing system parsing the input access code, otherwise, prompting that the length of the input access code is not correct.

3. The method according to claim 2, **characterized in that** the input access codes are multiple; and before the access code managing system stores the input access code, the method further comprises:
determining, by the access code managing system, whether the input access code in the first access code range and the access codes other than the input access code in the multiple access codes include one another, and if yes, storing the access codes with mutual inclusion into a conflict information array and prompting that there are conflict access codes, otherwise, executing the step of the access code managing system storing the input access code in the first access code range.

4. The method according to claim 3, **characterized in that** before the access code managing system stores the input access code in the first access code range, the method further comprises:
determining, by the access code managing system, whether the input access code in the first access code range and the access codes in the access code managing system include one another, and if yes, storing the access codes with mutual inclusion into a conflict information array and prompting that there are conflict access codes, otherwise, executing the step of the access code managing system storing the input access code in the first access code range.

5. The method according to claim 4, **characterized in that** the access codes in the access code managing system are of one or more kinds of a stored access code, a reserved access code, a blacklist access code and a shared access code.

6. The method according to claim 2, **characterized in that** after the preset corresponding relationship between the area identifier code and the access code range is changed, the method further comprises:
traversing, by the access code managing system, the access codes in the access code managing system;
finding out, by the access code managing system, a second access code range corresponding to the acquired first area identifier code according to the first area identifier code and the changed corresponding relationship between the area identifier code and access code range; and
determining whether the access codes in the access code managing system are in the second access code range, and if not, storing the access codes not in the second access code range into the conflict information array.

7. The method according to claim 2, **characterized in that** after the preset access code length is changed, the method further comprises:
traversing, by the access code managing system, the stored access codes, and determining whether the lengths of the access codes in the access code managing system meet the requirement according to the changed access code length, and if not, storing into the conflict information array the access codes whose lengths do not meet the requirement.

8. A system for managing access code, **characterized by** comprising:
a parsing module, adapted to parse an input access code to acquire a first area identifier code in the input access code;
a finding module, adapted to find out a first access code range corresponding to the acquired first area identifier code according to the first area identifier code and a preset corresponding relationship between an area identifier code and an access code range; and
a first determination module, adapted to determine whether the input access code is in the first access code range, and if yes, store the input access code in the first access code range, otherwise, store the input access code in the first access code range into a conflict information array and prompt that there is a conflict access code.

9. The system for managing the access code according to claim 8, **characterized by** further comprising:
a second determination module, adapted to determine whether the input access code in the first access code range and the access codes other than the input access code in the multiple access codes include one another, and if yes, store the access codes with mutual inclusion into the conflict information array and prompt that there are conflict access codes, otherwise, store the input access code in the first access code range.

10. The system for managing the access code according to claim 9, **characterized by** further comprising:
a third determination module, adapted to determine whether the input access code in the first access code range and the access codes stored in the access code managing system include one another, and if yes, store the access codes with mutual inclusion into the conflict information array and prompt that there are conflict access codes, otherwise, store the inputted access code in the first access code range.
